(19) Europäisches Patentamt
European Patent Office
Office européen des brevets

(11) Veröffentlichungsnummer: **0 073 911**
**B1**

(12) # EUROPÄISCHE PATENTSCHRIFT

(45) Veröffentlichungstag der Patentschrift: **25.09.85**

(51) Int. Cl.⁴: **C 09 D 7/12**, C 09 D 3/82, C 08 L 83/04, C 08 K 5/20

(21) Anmeldenummer: **82106445.8**

(22) Anmeldetag: **17.07.82**

(54) **Wasserhaltige Beschichtungsmittel auf Silikonharzbasis.**

(30) Priorität: **05.09.81 DE 3135241**

(43) Veröffentlichungstag der Anmeldung: **16.03.83 Patentblatt 83/11**

(45) Bekanntmachung des Hinweises auf die Patenterteilung: **25.09.85 Patentblatt 85/39**

(84) Benannte Vertragsstaaten: **BE DE FR GB IT NL SE**

(56) Entgegenhaltungen:
**AT - B - 174 998**
**GB - A - 1 372 061**
**US - A - 2 945 838**

(73) Patentinhaber: **Röhm GmbH, Kirschenallee Postfach 4242, D-6100 Darmstadt 1 (DE)**

(72) Erfinder: **Liebler, Ralf, Dr., Alfred-Messel-Weg 14, D-6100 Darmstadt (DE)**

**EP 0 073 911 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft wasserhaltige Beschichtungsmittel auf Silikonharzbasis in wässrig-organischer Lösung mit besonders hoher Lagerstabilität.

Die Technik verwendet die Kondensationsprodukte von partiell hydrolysierten siliciumorganischen Verbindungen als Beschichtungsmittel, vor allem für Glas und Kunststoffe.

Im allgemeinen wird die partielle Hydrolyse der siliciumorganischen Verbindungen durch saure Hydrolyse mit einer hinreichenden Menge Wasser durchgeführt. Die Bildung des Vorkondensates wird meist bei erhöhter Temperatur vorgenommen. Nachdem die Beschichtung vorgenommen worden ist, schliesst sich in der Regel eine Aushärtung, überwiegend durch Temperung bei erhöhter Temperatur an. Aus der DE-PS 2 522 241 waren Überzugsmittel bekannt, zu deren Herstellung aus vier verschiedenen Komponenten bestehende Siloxane mit Essigsäure hydrolysiert werden und durch thermische Behandlung ein Vorkondensat gewonnen wird. Empfohlen wird der Zusatz von Metallsalzen der Naphthensäuren als Katalysatoren zu den Überzugsmitteln, wobei eine verbesserte Topfzeit resultiert. Es ist weiter bekannt, dass man die Haltbarkeit (Topfzeit) von Beschichtungsmassen, die Metallsalze als Härtungskatalysatoren enthalten, noch verbessern kann, wenn man sie in Komplexverbindungen überführt. [Vgl. W. Krauss u. R. Kubens in «Deutsche Farben-Zeitschrift, 10, 1-7 (1956)»].

Empfohlen werden zur Komplexierung besonders 1,2-, 1,3- und 1,4-Dioxo- bzw. Oxyoxoverbindungen, wie z.B. Acetylaceton, Acetessigester, Malonsäure und insbesondere Diacetyl. Eine positive Wirkung üben auch bestimmte Amine aus, was zum Teil ebenfalls auf Komplexbildung zurückgeführt wird; allerdings sind Amine auf vielen Anwendungsgebieten für den praktischen Einsatz ungeeignet wegen der Vergilbung der Aufstriche, wegen der Gelierungsgefahr und wegen der grossen erforderlichen Zusatzmengen.

Krauss et al. teilen die Metallhärter in zwei Wirkungsgruppen ein: Die stark wirkenden Beschleuniger Blei, Aluminium und Calcium und die schwach wirkenden Beschleuniger Eisen, Zink, Kobalt, Mangan und Titan, wobei einer Kombination aus Metallen beider Gruppen eine besonders günstige Wirkung zugeschrieben wird, speziell, wenn die schwach wirkenden Metalle im Überschuss vorhanden sind. Nach Krauss et al. dürfen nur solche komplexaktiven Substanzen eingesetzt werden, die bevorzugt den stark wirkenden, nicht aber den schwach wirkenden Härtungsbeschleuniger binden. Problematisch bleibt vielfach die Wärmebeständigkeit der erzielten Überzüge. Als verbesserungsbedürftig mussten ebenfalls die Lagerungsbeständigkeit, insbesondere der mit Härtungskatalysatoren versehenen Beschichtungsmittel, angesehen werden. Es bestand also die Aufgabe, die Lagerbeständigkeit der mit Härtungskatalysatoren versehenen Beschichtungsmittel zu verbessern, ohne die Wirksamkeit der Härtungskatalysatoren dadurch zu beeinträchtigen.

Es wurde nun gefunden, dass die Haltbarkeit von wasserhaltigen Beschichtungsmitteln auf Silikonharzbasis, die durch Kondensation partiell hydrolysierter siliciumorganischer Verbindungen in Gegenwart von Säuren hergestellt wurden, entscheidend verbessert werden kann, wenn die Beschichtungsmittel Amide der Formel I

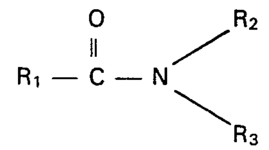

I

worin $R_1$ Wasserstoff, einen gegebenenfalls verzweigten Alkylrest mit 1 bis 22 Kohlenstoffatomen, insbesondere $C_1$- bis $C_6$- und $C_{12}$- bis $C_{18}$-Alkylreste, speziell die geradkettigen Alkylreste oder einen gegebenenfalls substituierten Phenylrest oder einen Alkoxyrest $-OR_4$, worin $R_4$ für einen Alkylrest mit 1 bis 18 Kohlenstoffatomen oder für einen gegebenenfalls substituierten Phenyl- oder Naphthylrest steht oder einen Rest $-N_2'R_3'$, worin $R_2'$ und $R_3'$ die gleichen Bedeutungen wie $R_2$ und $R_3$ besitzen können aber davon unabhängig sind und worin $R_2$ und $R_3$ unabhängig voneinander für Wasserstoff oder einen Alkylrest mit 1 bis 4 Kohlenstoffatomen stehen, bedeuten, oder worin $R_2$ und $R_3$ oder $R_1$ und $R_3$ zusammen mit dem Stickstoff einen, gegebenenfalls weitere Stickstoff- oder Sauerstoffatome im Ring tragenden, fünf-, sechs- oder sieben-gliedrigen Heterocyclus bilden bzw. Mischungen derselben enthalten.

Als Substituenten am Phenylrest kommen insbesondere Nitro-, Alkyl-, Alkoxy-, Hydroxy-, Amino-, Sulfonsäure, Halogen, oder weitere Phenylreste in Frage, wobei die Kohlenstoffzahl der Substituenten allgemein $C_{22}$ nicht überschreitet. Die Aminogruppen können ihrerseits substituiert, insbesondere alkyliert sein.

Besonders bevorzugt sind die Verbindungen der allgemeinen Formel I, worin $R_1$ für Wasserstoff, Methyl, Ethyl, Propyl, Butyl, Pentyl oder Hexyl inklusive der Isomeren, vorzugsweise der geradkettigen Verbindung steht, und worin $R_2$ und $R_3$ für Wasserstoff, Methyl oder Ethyl stehen, sowie die Verbindungen, worin $R_1$ einen Rest $-OR_4$ bedeutet und $R_4$ für Ethyl und $R_2$ und $R_3$ für Wasserstoff, einen Methyl- oder einen Ethylrest stehen.

Besonders genannt seien Formamid, Dimethylformamid, Acetamid, Dimethylacetamid, Propionamid, speziell Acetamid, Propionamid und n-Butyramid sowie Carbamidsäureethylester und N-Ethylcarbamidsäureethylester. Ferner können als Amide Methylformamid, Diethylformamid, i-Butyramid, Pivalinsäureamid, Stearinsäureamid u.a. mit Vorteil verwendet werden. Weiter seien die Morpholinide, Piperidide der erfindungsgemäss umfassten Reste $R_1$ CO- genannt.

Der Gehalt der erfindungsgemäss zuzusetzenden Amide, z.B. der Amide der Formel I beträgt 1 - 20 Gew.-%, bezogen auf das gesamte Beschichtungsmittel, vorzugsweise 3 - 10 Gew.-%, speziell 5 ± 1 Gew.-%. Der Wassergehalt der erfindungsgemässen Beschichtungsmittel liegt in der Regel bei 5 - 20 Gew.-%, bezogen auf das gesamte Beschichtungsmittel, insbesondere 10 - 15 Gew.-%, speziell 13 ± 2 Gew.-%. Die Amide der Formel I können

den erfindungsgemässen Mitteln bereits bei der Herstellung der Kondensationsprodukte aus partiell hydrolysierten, siliciumorganischen Verbindungen oder vorzugsweise den Mitteln, welche die Kondensationsharze bereits in einer Trägerphase enthalten, also beispielsweise den Mitteln des Standes der Technik, zugesetzt werden. Der Zusatz kann in der an sich üblichen Weise, vorzugsweise durch Einrühren, gegebenenfalls zusammen mit anderen Lösungsmitteln, vorgenommen werden.

Zur Herstellung der erfindungsgemässen Beschichtungsmittel eignen sich die aus dem Stand der Technik bekannten siliciumorganischen Verbindungen, wie Alkyltrialkoxysilane, Dialkyldialkoxysilane, Tetraalkoxysilane und die einschlägig verwendeten, aromatisch substituierten Silane sowie die einschlägig verwendeten funktionell substituierten siliciumorganischen Verbindungen. Genannt seien z.B. die Verbindungen der Formel II

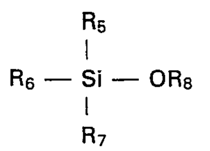

II

worin $R_5$, $R_6$ und $R_7$ unabhängig voneinander für einen Rest $-(O)_nR_9$ stehen, wobei $R_8$ und $R_9$ einen Alkylrest mit 1 bis 5 Kohlenstoffatomen oder einen Vinylrest, Allylrest oder Phenylrest, vorzugsweise einen Methyl- oder einen Ethylrest und n Null oder eins bedeuten, oder worin $R_8$ und/oder $R_9$ für einen Rest
$H[NH — (CH_2)_{m'}]_p — NH(CH_2)_m$- stehen, wobei m und m' für eine Zahl von 1 bis 6, und p für null oder eins steht oder worin $R_8$ und/oder $R_9$ für einen Rest

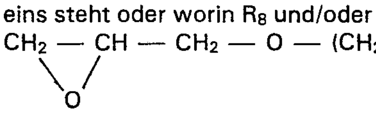

stehen,

worin q für eine Zahl von 1 bis 6 steht oder $R_8$ und/oder $R_9$ für einen Rest

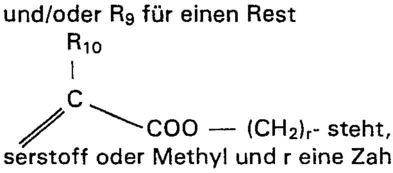

steht, worin $R_{10}$ Wasserstoff oder Methyl und r eine Zahl von 1 bis 6 bedeutet.

Die erfindungsgemässen, wasserhaltigen Beschichtungsmittel werden dargestellt, indem man die siliciumorganischen Verbindungen, insbesondere die Verbindungen der Formel I mit einer zur Hydrolyse ausreichenden Menge Wasser, d.h. $\geqslant 0,5$ Mol Wasser pro Mol der zur Hydrolyse vorgesehenen Gruppen, wie z.B. Alkoxygruppen hydrolysiert, vorzugsweise unter Säurekatalyse. Als Säuren können z.B. anorganische Säuren, wie Salzsäure, Schwefelsäure, Phosphorsäure, Salpetersäure usw., oder organische Säuren, wie Carbonsäuren, organische Sulfonsäuren usw., oder saure Ionenaustauscher zugesetzt werden, wobei der pH der Hydrolysereaktion in der Regel zwischen 2 und 4,5, vorzugsweise bei 3 liegt.

Im allgemeinen zeigt sich nach dem Zusammengeben der Reaktionspartner ein Temperaturanstieg. In gewissen Fällen kann es notwendig werden, zum Anspringen der Reaktion von aussen Wärme zuzuführen, beispielsweise durch Erwärmen des Ansatzes auf 40 - 50°C. Zweckmässigerweise wird darauf geachtet, dass die Reaktionstemperatur 55°C nicht überschreitet. Die Reaktionsdauer ist in der Regel relativ kurz, sie liegt im allgemeinen unter einer Stunde, beispielsweise bei 45 min. Zur weiteren Bearbeitung kann zweckmässigerweise ein Teil des Wasser-Alkoholgemisches und der flüchtigen Säuren im Vakuum abgezogen werden. Anschliessend kann mit geeigneten organischen Lösungsmitteln, wie z.B. Alkoholen, wie Ethanol, Methanol, Isopropanol, Butanol, Ethern, wie Diethylether, Dioxan, Ethern und Estern von Polyolen, wie z.B. Ethylenglykol, Propylenglykol sowie Ether-Estern dieser Verbindungen, Kohlenwasserstoffen, z.B. aromatischen Kohlenwasserstoffen, Ketonen, wie Aceton, Methylethylketon, der Feststoffgehalt auf ca. 15 - 35 Gew.-% eingestellt werden. Besonders bevorzugt ist als Lösungsmittel Propanol-2.

Es hat sich ferner als vorteilhaft erwiesen, den Mitteln solche Lösungsmittel zuzusetzen, die normalerweise den als Substrat der Beschichtung vorgesehenen Kunststoff anlösen. Im Falle von Polymethylmethacrylat (PMMA) als Substrat empfiehlt sich beispielsweise ein Zusatz von Lösungsmitteln, wie Toluol, Aceton, Tetrahydrofuran in Mengen, die 2 bis 20%, bezogen auf das Gesamtgewicht der Mittel, ausmachen. Der Wassergehalt der erfindungsgemässen Mittel wird im allgemeinen auf 5 - 20 Gew.-%, vorzugsweise auf 13 ± 2 Gew.-%, bezogen auf das Gesamtgewicht der Mittel, eingestellt.

Der pH-Wert der erfindungsgemässen wasserhaltigen Beschichtungsmittel sollte im Bereich von 3 - 6 liegen, bevorzugt zwischen 4,5 und 5,5. Es hat sich erwiesen, dass innerhalb dieses Bereichs die Kondensation während der Lagerung besonders gering ist. Die Einstellung des pH-Bereichs kann in an sich bekannter Weise, beispielsweise durch Zugabe geeigneter Basen, wie Alkali-, Erdalkali- oder Ammoniumhydroxid, gegebenenfalls in alkoholischer Lösung oder entsprechender Salze schwacher Säuren, wie der Carbonate, Acetate vorgenommen werden. Es bieten sich insbesondere Puffersysteme innerhalb des genannten pH-Bereichs, wie beispielsweise eine Pufferlösung aus Essigsäure/Kaliumhydroxid, an. Besonders vorteilhaft ist eine Ausführungsform, bei der höhere Carbonsäuren, insbesondere Carbonsäuren mit 8 bis 12 Kohlenstoffatomen in Anteilen von 0,01 Mol bis 1 Mol Säure pro Mol der hydrolysierbaren siliciumorganischen Verbindungen, wie der Verbindungen der Formel II in dem Beschichtungsmittel enthalten sind.

Vorteilhafterweise werden den erfindungsgemässen Beschichtungsmitteln Härtungskatalysatoren, beispielsweise in Form von Zinkverbindungen und/oder anderer Metallverbindungen, wie Kobalt-, Kupfer- oder Calciumverbindungen, insbesondere deren Octoate oder Naphthenate, zugesetzt.

Der Anteil der Härtungskatalysatoren beträgt in der Regel 0,1 - 2,5 Gew.-%, speziell 0,2 - 2 Gew.-%, bezogen auf das gesamte Beschichtungsmittel. Besonders genannt seien beispielsweise Zinknaphthenat, -octoat, -acetat, -sulfat usw.

Falls der Zusatz der höheren Carbonsäuren gemäss der oben angegebenen Definition nicht bereits zum Zweck der Hydrolyse geschehen war, setzt man erfindungsgemäss dem Mittel vor der Lagerung eine oder mehrere höhere Carbonsäuren in solchen Mengen zu, dass 0,05 - 0,2 Mol der höheren Carbonsäuren, vorzugsweise 0,1 - 0,15 Mol auf ein Mol eingesetztes Silan kommen.

Die so erhaltenen Beschichtungsmittel besitzen bei hervorragender Lagerungsfähigkeit besonders gute Härtungscharakteristiken. Sie lassen sich z.B. in relativ kurzer Zeit, beispielsweise innerhalb 4 bis 6 Stunden, in der Regel innerhalb ca. 5 Stunden und bei vergleichsweise niedriger Temperatur, beispielsweise bei 90 - 110°C, vorzugsweise bei ca. 100°C zu hervorragend kratz- und haftfesten Beschichtungen aushärten.

Die erfindungsgemässen Mittel eignen sich zur Beschichtung von festen Kunststoffoberflächen, wie von glasartigen Substraten, insbesondere der Polymerkunststoffe auf Acrylharzbasis, wie Polymethylmethacrylat und der verschiedenen Modifikationen, Polycarbonat, Melaminformaldehydharzen, Polystyrol, Polyvinylchlorid, Polyäthylen, Polypropylen, Polytetrafluoräthylen.

Das zweckmässige Überzugsgewicht hängt innerhalb gewisser Grenzen von dem zu beschichtenden Substrat ab. Im allgemeinen beträgt das Überzugsgewicht, ausgedrückt als Feststoffgewicht, 2 bis 6 $g/m^2$. Die Schichtdicken liegen in der Regel von 0,25 bis 25 $\mu$.

Das Überziehen der Substrate kann z.B. durch Tauchen und kontrolliertes Aus-der-Lösung-ziehen der zu beschichtenden Oberflächen geschehen.

Das Herausziehen kann z.B. mit einer Geschwindigkeit von 10 bis 40 cm/min erfolgen.

Weiter sind Beschichtungsverfahren, wie Sprüh-, Strömungs- oder Wirbelschichtauftrag anwendbar.

Die derart beschichteten Substratkörper werden in geeigneter Weise gehärtet, vorzugsweise durch Tempern bei erhöhter Temperatur, im allgemeinen bei 80 - 100°C während 2 bis 6 Stunden, vorzugsweise während ca. 5 Stunden im Trockenofen.

Die durch Anwendung der erfindungsgemässen Beschichtungsmittel erreichten Oberflächenbeschichtungen zeichnen sich durch eine äusserst hohe Kratzfestigkeit, hohe Haftfestigkeit, Dauerhaftigkeit, Hitzebeständigkeit, Beständigkeit gegen Haarrissbildung, Glanz, Beständigkeit gegen Wasser- und Lösungsmittel, optische Einheitlichkeit u.ä. aus.

Hervorzuheben ist die ausserordentlich günstige Lagerstabilität der erfindungsgemässen Beschichtungsmittel. Sie beträgt in der Regel > 40d bei 30°C-Lagerung.

Die folgenden Beispiele dienen zur Erläuterung der Erfindung.

*A. Testmethoden*

Zur Beschleunigung der Lagerstabilitätstests werden die Ansätze bei 30°C gelagert. Nach erfolgter Tauchbeschichtung härtet man 5 Stunden bei 100°C aus. Die Prüfung auf Kratzfestigkeit erfolgt durch Reiben mit Stahlwolle 00. Die Haftung wird mittels des Gitterschnitt-Tests nach DIN 53 151 ermittelt.

*Beispiele 1 bis 6*

1000 g Methyltriethoxysilan werden mit 454 g $H_2O$ und 50 g Eisessig hydrolysiert. Die Temperatur wird dabei unter 50°C gehalten. Nach 3/4 h zieht man im Vakuum 865 g Ethanol/Wasser-Gemisch ab, verdünnt den Rückstand mit 555 g i-Propylalkohol und 57 g Toluol und stellt den Wassergehalt auf 13% ein. Als Härtungskatalysator werden 6,3 g Zinkoctoat und zur pH-Einstellung 25 g 3,5%ige methanolische KOH-Lösung zugesetzt.

Der Ansatz wird anschliessend zu je 130 g aufgeteilt und mit verschiedenen Amiden bzw. Carbamidsäurederivaten versetzt. Zum Vergleich wird das Ergebnis mit Acetylaceton angeführt (Beispiel 6). Die Ergebnisse sind in der folgenden Tabelle zusammengefasst:

*Verbindungen der Formel I*

| Beispiel | Carbonsäureamid | Carbamidsäurederivat | Lacke zu kratzfest. Beschichtgn. aushärtb. während [d 30°C-Lagerung] | gute Haftung während [30°C-Lagerung] |
|---|---|---|---|---|
| 1 | 11,5 g Dimethylformamid | | 21 | > 29 |
| 2 | 8,3 g Diethylformamid | | 29 | > 29 |
| 3 | 6,7 g Acetamid | | 40 | > 40 |
| 4 | 8,3 g Propionamid | | 45 | > 45 |
| 5 | | 13,4 g Ethylcarbamidsäureethylester | 25 | > 29 |
| Vergleich 6 | 11,4 g Acetylaceton | | 11 | 29 |

*Beispiele 7 bis 10*

1000 g Methyltriethoxysilan werden mit 454 g Wasser und 50 g stark saurem Ionenaustauscher [Bayer Lewatit SC 102® ] bis zum Anspringen der Hydrolyse auf ~ 45°C erwärmt. Man hält die Temperatur anschliessend unter 55°C. Nach 3/4 h zieht man im Vakuum ~ 663 g Ethanol/Wasser-Gemisch ab, verdünnt den Rückstand mit 242 g n-Butylalkohol, 37 g Ethylglykol und 24 g Toluol und filtriert den Ionenaustauscher ab. Der Wassergehalt wird auf 14% eingestellt. Als Härtungskatalysator werden 5,5 g Zinkoctoat und zur pH-Eistellung 11 g 3,5%ige methanolische KOH-Lösung und 94 g 2-Ethylhexansäure zugegeben.

Je 160 g dieser Lösung versetzt man schliesslich mit 8 g Acetamid oder 9,3 g DMF.

Die Vergleichsbeispiele (9 und 10) enthalten anstelle von 2-Ethylhexansäure Essigsäure.

Die Ergebnisse sind in folgender Tabelle aufgeführt:

| Beispiel | Carbonsäureamid | Carbonsäure | Lacke zu kratzfest. Beschichtungen aushärtb. während [d 30°C-Lagerung] | gute Haftung während [30°C-Lagerung] |
|---|---|---|---|---|
| 7 | Acetamid | 2-Ethylhexansäure | 22 | > 20 |
| 8 | DMF | — " — | 22 | > 20 |
| zum Vergleich: | | | | |
| 9 | Acetamid | Essigsäure | 20 | > 20 |
| 10 | DMF | — " — | 16 | > 20 |

Ähnlich günstige Ergebnisse wurden auch mit anderen, einschlägig verwendeten Testmethoden erzielt, z.B. der Taber-Abriebmethode (ASTM D 1044), dem Sandrieselverfahren (DIN 52 348 E).

Die erfindungsgemässen Beschichtungsmittel behalten die positiv zu wertenden Eigenschaften analoger Mittel des Standes der Technik bei. Sie können auch die aus dem Stand der Technik bekannten Zusätze, wie Siliciumdioxid, Titandioxid, UV-Absorptionsmittel, Farbstoffe, Pigmente, Antistatika, Antioxidantien, Netzmittel, Antischaummittel, Antifoulingzusätze u.ä. in den einschlägig bekannten Mengen enthalten. Die mit den erfindungsgemässen Mitteln beschichteten Oberflächen lassen sich leicht reinigen.

**Patentansprüche**

1. Wasserhaltige Beschichtungsmittel auf Siliciumharzbasis mit verbesserter Lagerstabilität, hergestellt durch Kondensation partiell hydrolysierter siliciumorganischer Verbindungen in Gegenwart von Säuren, dadurch gekennzeichnet, dass die Beschichtungsmittel Amide der Formel I

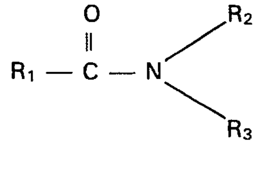

I

worin $R_1$ Wasserstoff, einen gegebenenfalls verzweigten Alkylrest mit 1 bis 22 Kohlenstoffatomen oder einen gegebenenfalls substituierten Phenylrest oder einen Alkoxyrest $-OR_4$, worin $R_4$ für einen Alkylrest mit 1 bis 18 Kohlenstoffatomen, einen gegebenenfalls substituierten Phenyl- oder Naphthylrest steht oder einen Rest $-N\ R_2'R_3'$, worin $R_2'$ und $R_3'$ die gleichen Bedeutungen wie $R_2$ und $R_3$ besitzen und worin $R_2$ und $R_3$ unabhängig voneinander für Wasserstoff, oder einen Alkylrest mit 1 bis 4 Kohlenstoffatomen oder einen gegebenenfalls substituierten Phenylrest stehen, bedeuten, oder worin $R_2$ und $R_3$ oder $R_1$ und $R_3$ zusammen mit dem Stickstoff einen, gegebenenfalls weitere Stickstoff- oder Sauerstoffatome im Ring tragenden, fünf-, sechs- oder sieben-gliedrigen Heterocyclus bilden, bzw. Mischungen derselben enthalten.

2. Beschichtungsmittel gemäss Anspruch 1, dadurch gekennzeichnet, dass es Metallverbindungen als Härtungskatalysatoren enthält.

3. Beschichtungsmittel gemäss Anspruch 1, dadurch gekennzeichnet, dass $R_1$ für Wasserstoff, Methyl, Ethyl, Propyl, Butyl, Pentyl oder Hexyl steht und worin $R_2$ und $R_3$ unabhängig voneinander für Wasserstoff, Methyl oder Ethyl stehen.

4. Beschichtungsmittel gemäss Anspruch 1, dadurch gekennzeichnet, dass $R_1$ für einen Rest $-OR_4$ steht und wobei $R_4$ Ethyl und $R_2$ und $R_3$ Wasserstoff, Methyl oder Ethyl bedeuten.

5. Beschichtungsmittel gemäss den Ansprüchen 1 bis 4, dadurch gekennzeichnet, dass der Gehalt des bzw. der zuzusetzenden Amide der Formel I 1 - 20 Gew.-%, bezogen auf das gesamte Beschichtungsmittel, beträgt.

6. Beschichtungsmittel gemäss den Ansprüchen 1 bis 5, dadurch gekennzeichnet, dass sie einen Wassergehalt von 5 - 20 Gew.-%, bezogen auf das gesamte Beschichtungsmittel, aufweisen.

7. Beschichtungsmittel gemäss den Ansprüchen 1 bis 6, dadurch gekennzeichnet, dass zusätzlich

zu den Amiden der Formel I 0,01 bis 1 Mol an Alkancarbonsäuren mit 6 bis 21 Kohlenstoffatomen im Molekül auf ein Mol der eingesetzten siliciumorganischen Verbindung eingesetzt werden.

8. Verwendung der Beschichtungsmittel gemäss den Ansprüchen 1 bis 7, zur Beschichtung von Acrylharzkunststoffen.

9. Verwendung der Beschichtungsmittel gemäss Anspruch 8, zur Beschichtung von Polymethylmethacrylat.

10. Verwendung der Beschichtungsmittel gemäss den Ansprüchen 1 bis 7, zur Beschichtung von Polycarbonat.

**Claims**

1. Water-containing coating compositions based on silicon resin having improved storage qualities, prepared by the condensation of partially hydrolysed silicon-organic compounds in the presence of acids, characterised in that the coating compositions contain amides of formula I

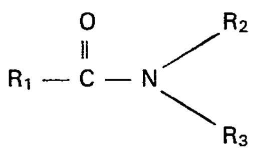 I

wherein $R_1$ represents hydrogen, an optionally branched alkyl group with 1 to 22 carbon atoms or an optionally substituted phenyl group or an alkoxy group $-OR_4$ wherein $R_4$ represents an alkyl group with 1 to 18 carbon atoms, an optionally substituted phenyl or naphthyl group or a group $-N\ R_2'R_3'$, wherein $R_2'$ and $R_3'$ have the same meanings as $R_2$ and $R_3$ and wherein $R_2$ and $R_3$, independently of each other, represent hydrogen or an alkyl group with 1 to 4 carbon atoms or an optionally substituted phenyl group, or wherein $R_2$ and $R_3$ or $R_1$ and $R_3$ together with the nitrogen form a five-, six- or seven-membered heterocyclic group optionally containing other nitrogen or oxygen atoms in the ring, or mixtures thereof.

2. Coating compositions as claimed in claim 1, characterised in that they contain metal compounds as curing catalysts.

3. Coating compositions as claimed in claim 1, characterised in that $R_1$ represents hydrogen, methyl, ethyl, propyl, butyl, pentyl or hexyl and wherein $R_2$ and $R_3$ independently of each other represent hydrogen, methyl or ethyl.

4. Coating composition as claimed in claim 1, characterised in that $R_1$ represents a group $-OR_4$ and wherein $R_4$ represents ethyl and $R_2$ and $R_3$ represent hydrogen, methyl or ethyl.

5. Coating composition as claimed in claims 1 to 4, characterised in that the content of the amide or amides of formula I to be added is from 1 - 20% by weight, based on the entire coating composition.

6. Coating composition as claimed in claims 1 to 5, characterised in that they have a water content of from 5 to 20% by weight, based on the entire coating composition.

7. Coating composition as claimed in claims 1 to 6, characterised in that, in addition to the amides of formula I, 0.01 to 1 mol of alkane carboxylic acids having 6 to 21 carbon atoms in the molecule are used per mole of silicon-organic compound used.

8. Use of the coating compositions as claimed in claims 1 to 7 for coating acrylic resin plastics.

9. Use of the coating compositions as claimed in claim 8 for coating polymethylmethacrylate.

10. Use of the coating compositions as claimed in claims 1 to 7 for coating polycarbonate.

**Revendications**

1. Produits d'enduction hydratés à base de résine silicone, possédant une stabilité au stockage améliorée, préparés par condensation de composés organosiliciés partiellement hydrolysés en présence d'acides, caractérisés en ce qu'ils contiennent des amides de formule I

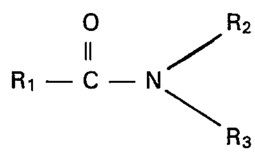 I

dans laquelle $R_1$ est mis pour un atome d'hydrogène, un radical alkyle à 1 - 22 atomes de carbone éventuellement ramifié, un radical phényle éventuellement substitué, un radical alcoxy $-OR_4$ dans lequel $R_4$ est un radical alkyle à 1 - 18 atomes de carbone, un radical naphthyle ou phényle éventuellement substitué, ou un radical $-N\ R_2'R_3'$, $R_2'$ et $R_3'$ ayant les mêmes significations que $R_2$ et $R_3$, et dans laquelle $R_2$ et $R_3$, indépendamment l'un de l'autre, sont mis chacun pour un atome d'hydrogène, un radical alkyle à 1 - 4 atomes de carbone ou un radical phényle éventuellement substitué, ou dans laquelle $R_2$ et $R_3$ ou $R_1$ et $R_3$ forment ensemble, avec l'atome d'azote, un noyau hétérocyclique pentagonal, hexagonal ou heptagonal portant éventuellement d'autres atomes d'azote ou d'oxygène dans le noyau, ou des mélanges de ces amides.

2. Produit d'enduction selon la revendication 1, caractérisé en ce qu'il contient des composés métalliques servant de catalyseurs de durcissement.

3. Produit d'enduction selon la revendication 1, caractérisé en ce que $R_1$ est mis pour un atome d'hydrogène, un radical méthyle, éthyle, propyle, butyle ou hexyle et $R_2$ et $R_3$, indépendamment l'un de l'autre, sont mis chacun pour un atome d'hydrogène, un radical méthyle ou éthyle.

4. Produit d'enduction selon la revendication 1, caractérisé en ce que $R_1$ est mis pour un groupement $-OR_4$, $R_4$ étant un radical éthyle, et en ce que $R_2$ et $R_3$ représentent chacun un atome d'hydrogène, un radical méthyle ou éthyle.

5. Produit d'enduction selon l'une quelconque des revendications 1 à 4, caractérisé en ce que la teneur en amide ou amides de formule I à ajouter est de 1 à 20% en poids, par rapport au produit d'enduction total.

6. Produit d'enduction selon l'une quelconque

des revendications 1 à 5, caractérisé en ce qu'il présente une teneur en eau de 5 à 20% en poids, par rapport au produit d'enduction total.

7. Produit d'enduction selon l'une quelconque des revendications 1 à 6, caractérisé en ce qu'en plus des amides de formule I, il y est introduit 0,01 à 1 mol d'acide alcane-carboxylique à 6 - 21 atomes de carbone dans la molécule, par mol du composé organosilicié utilisé.

8. Utilisation des produits d'enduction selon l'une quelconque des revendications 1 à 7, pour l'enduction de matières synthétiques en résines acryliques.

9. Utilisation des produits d'enduction selon la revendication 8 pour l'enduction de polyméthacrylate de méthyle.

10. Utilisation des produits d'enduction selon l'une quelconque des revendications 1 à 7 pour l'enduction de polycarbonate.